# EUROPÄISCHE PATENTSCHRIFT

(11) **EP 2 303 736 B1**
(45) Veröffentlichungstag und Bekanntmachung des Hinweises auf die Patenterteilung: **06.02.2013**
(21) Anmeldenummer: 09779190.9
(22) Anmeldetag: 20.03.2009
(51) Int. Cl.: B65G 59/02

(54) **VORRICHTUNG ZUM KOMMISSIONIEREN UND/ODER UMSCHICHTEN MEHRERER PALETTIERTER GEBINDE**
DEVICE FOR LOADING AND/OR RESTACKING A PLURALITY OF PALLETED CONTAINERS
DISPOSITIF POUR CHARGER ET/OU REGROUPER DES GROUPES DE RECIPIENTS SUR PALETTES

(30) Priorität: 29.07.2008 DE 102008035330
(43) Veröffentlichungstag der Anmeldung: 06.04.2011
(73) Patentinhaber: Krones AG, 93073 Neutraubling (DE)
(72) Erfinder: WEGENER, Kai, 81379 München (DE); KIRSCHNER, Peter, 83139 Söchtenau (DE); HERTEL, Florian, 83064 Raubling (DE); SCHWARZER, Dieter, 83059 Kolbermoor (DE)
(74) Vertreter: Reichert, Werner Franz
(86) Internationale Anmeldenummer: PCT/EP2009/053306
(87) Internationale Veröffentlichungsnummer: WO 2010/012511

(56) Entgegenhaltungen:
- WO-A-93/10028
- WO-A-98/49078
- WO-A-2006/088354
- WO-A-2009/012508
- DE-A1- 2 062 845
- DE-A1- 4 218 468
- FR-A- 2 696 430
- US-A- 3 070 241
- US-A- 4 453 874

## Beschreibung

Die vorliegende Erfindung betrifft eine Vorrichtung zum Kommissionieren und/ oder Umschichten mehrerer palettierter Gebinde mit einer Einrichtung zum teilweisen Anheben der Gebinde einer obersten Lage der palettierten Gebinde und zu deren Überführen auf einen Förderteppich eines beweglichen Transportkopfes.

Aus der WO 2006/088354 A1 ist eine Vorrichtung zum Depalettieren von Gegenständen auf eine Palette bekannt, bei der ein Aufwälzgreifer an seiner Vorderkante eine Platte aufweist. Diese Platte weist zudem ein Förderband zum Transport der Lagen auf. Zum Aufwälzen der Lagen wird der Greifer über eine Laufkatze derart gegen die zu depalettierenden Lagen gefahren, so dass die Lagen Reihe für Reihe aufgewälzt werden. Um das Aufnehmen der Lage zu erleichtern werden die einzelnen Gegenstände beziehungsweise Lagen mittels eines Gegenhalters abgestützt um die Aufnahme der Gebinde zu erleichtern. Das Ablegen der Lage erfolgt in umgekehrter Reihenfolge.

Die DE 10 2006 022 155 A1 offenbart eine Verbesserung des Entpalletierens von gestapelten Gebinden. Diese Erfindung schlägt zum einen ein Verfahren zum Depalettieren von gestapelten Gebinden vor, bei dem die Gebinde reibschlüssig angehoben und durch mindestens einen Tragboden unterfahren werden. Das Anheben der Gebinde erfolgt hierbei an zwei aneinander gegenüberliegenden Seiten. Diese Anmeldung offenbart des Weiteren eine Vorrichtung zum Entpalletieren von gestapelten Gebinden. Diese Vorrichtung umfasst einen Tragboden und mindestens eine Walze zum Anheben der Gebinde, bei der die Vorrichtung mindestens zwei einander gegenüberliegende Walzen aufweist. Nachteilig in dieser Vorrichtung ist, dass die Tragplatten beim Aufnehmen und Ablegen aus dem Kopf seitlich herausragen. Dies ist bei der erfindungsgemäßen Vorrichtung nicht der Fall.

Aus der EP 1 908 709 A1 ist eine Vorrichtung zur Aufnahme von Gebinden mit einem Tragboden für die Gebinde bekannt. Die Vorrichtung weist eine zumindest teilweise offene

Vorderseite zum Einbringen der Gebinde auf und kennzeichnet sich dadurch, dass sie einen beweglich verbundenen Schieber zum Verlagern der Gebinde entlang einer horizontalen Aufnahmerichtung durch die offene Vorderseite aufweist.

DE 10 2008 002 831 A1 bezieht sich auf eine Vorrichtung und ein Verfahren zum Überführen von gruppierten Gebindelagen mittels eines kontinuierlich antreibbaren Stetigförderers in die Beladestation einer Transportvorrichtung. Die Beladestation, ist in DE-10 2008 002 831 A1 als ein Jalousiekopf ausgestaltet und umfasst einen schwenkbaren Bügel, der zum Sichern der Gebindelagen an der dem Stetigförderer zugewandten Seite vorgesehen ist. Ferner beaufschlagt der schwenkbare Bügel die bereits in der Beladestation vorhandenen Gebindelagen mit einer zusätzlichen Bewegungskomponente in Transportrichtung, um die zumindest teilweise in der Beladestation bereits vorhandenen Gebindelagen weiter beziehungsweise komplett in den Jalousiekopf zu schieben.

WO 2006/088354 A1 offenbart eine Vorrichtung und ein Verfahren gemäß den Oberbegriffen der Ansprüche 1 und 10. WO 93/10028 A1 und US 4,453,874 offenbaren auch jeweils eine Vorrichtung zum Kommissionieren und / oder Umschichten mehrerer palettierter Gebinde mit einer Einrichtung zum Anheben der Gebinde mindestens einer Teillage mindestens einer Lage der palettierten Gebinde und zu deren Überführen auf einen Förderteppich eines beweglichen Transportkopfes. Die Einrichtung ist durch mindestens eine am Transportkopf integrierte und angetriebene Aufwälzrolle gebildet. DE 2062845 A, US 3070241 A1, DE 4218468 A1, FR 2696430 A1 offenbaren weitere Vorrichtungen zum Kommissionieren und /oder Umschichten mehrerer palettierter Gebinde.

Aufgabe der Erfindung ist, eine Vorrichtung zu schaffen, die für die Palettierung einen geringen Platzbedarf beansprucht und die Geschwindigkeit beim Palettieren erhöht.

Die obige Aufgabe wird durch eine Vorrichtung gelöst, die die Merkmale des Patentanspruchs 1 umfassen.

Die erfindungsgemäße Vorrichtung zum Depalettieren mehrerer palettierter Gebinde weist eine Einrichtung zum teilweisen Anheben der Gebinde mindestens einer obersten Lage auf. Des Weiteren dient die Vorrichtung zum Überführen der Gebinde auf einen Förderteppich eines beweglichen Transportkopfes. Die Vorrichtung umfasst dabei eine Einrichtung, die durch eine am Transportkopf integrierte und angetriebene Aufwälzrolle gebildet ist. Integriert in Bezug auf die angetriebene Aufwälzrolle bedeutet, dass die Einrichtung mit Aufwälzrolle und Antrieb integraler Bestandteil des Transportkopfes beziehungsweise des Jalousiekopfes der Vorrichtung ist. Der bekannte Transportkopf ist in dieser Vorrichtung als Jalousiekopf ausgebildet. Der Einsatz einer solchen Einrichtung mit integrierter und angetriebener Aufwälzrolle im Jalousiekopf bietet einige Vorteile. Ein Vorteil besteht beispielsweise darin, dass die Vorrichtung beim Palettieren der gestapelten Gebinde einen geringeren Platzbedarf beansprucht. Ein weiterer Vorteil liegt darin, dass zugleich die Geschwindigkeit beim Palettieren der gestapelten Gebinde erhöht wird. Diese Vorrichtung ist auch dazu geeignet, verschiedenartig verpackte Gegenstände aufzunehmen und wieder abzusetzen.

Eine Ausführungsvariante der erfindungsgemäßen Vorrichtung weist einen Jalousiekopf auf, der zum Aufnehmen und Absetzen von zumindest Teillagen geeignet ist. Die Vorrichtung ermöglicht beispielsweise vereinzelte, äußere Gebinde einer obersten Lage einer Palette aufzunehmen. Beim Absetzen von zumindest Teillagen wird der Jalousiekopf geöffnet und die zu depalettierenden Teillagen können beispielsweise wieder auf einer Palette abgesetzt werden. Ein Vorteil der Vorrichtung besteht darin, dass durch das komfortable Aufnehmen und Absetzen der Gebinde, Gebindelagen oder ähnlicher Gegenstände die Gesamtgeschwindigkeit zwischen Aufnahme und Absetzen erhöht werden kann.

Weiterhin bevorzugt wird bei der erfindungsgemäßen Vorrichtung die Aufwälzrolle mit einer Beschichtung versehen. Die Beschichtung der Aufwälzrolle weist vorzugsweise einen geeigneten Reibungskoeffizienten zwischen den Bodenflächen und Mantelflächen der aufzunehmenden Gebinde oder Gebindelagen und Aufwälzrolle auf. Bedingt durch den Reibungskoeffizienten von beschichteter Aufwälzrolle zu Mantelfläche und Bodenfläche der Gebinde führt es zu einer Erleichterung beim Überführen der Gebinde in den Jalousiekopf. Als sehr vorteilhaft zeigt sich, die Beschichtung der Aufwälzrolle als Gummierung auszugestalten. Die Beschichtung könnte vorteilhafter Weise auch als Silikonwerkstoff ausgebildet sein. Diese erhöht den Grip bei der Überführung einzelner Gebinde oder Gebindelagen in den Jalousiekopf der Vorrichtung.

Eine weitere Ausgestaltung der erfindungsgemäßen Vorrichtung sieht vor, die Aufwälzrolle mit einer Strukturierung an deren Oberfläche zu versehen. Diese könnte beispielsweise rautenähnlich mit Nuten als Vertiefung geprägt sein. Das hat den Vorteil, dass zum einen eventuell angelagerter Schmutz oder ähnliches den Reibwert zwischen Aufwälzrolle und Gebinde nicht vermindert, vielmehr dienen die Nuten dabei als Schmutzpuffer. Zum Anderen können die gebildeten Rauten als Oberfläche auch den Reibwert zwischen Aufwälzrolle und Gebinde in der Art erhöhen, da durch das gewählte Profil eine Art von Formschluss zu den Gebinden entsteht.

Um das Überführen der Gebinde in den Jalousiekopf zudem zu erleichtern, ist es von Vorteil, die Oberfläche der Aufwälzrolle mit einer Strukturierung zu versehen, die sich als rautenähnliches Muster mit Nuten als Vertiefung darstellt.

Eine weitere Ausgestaltung der erfindungsgemäßen Vorrichtung sieht vor, die in den Transportkopf der Einrichtung integrierte Aufwälzrolle mittels eines Antriebs anzusteuern. Vorzugsweise könnte hier ein Elektromotor zum Einsatz kommen. Der Elektromotor kann als Direktantrieb oder als Getriebemotor ausgestaltet sein. Eine Kombination anderer für den Fachmann bekannter Antriebsarten ist hier nicht auszuschließen.

Eine Ausführungsvariante sieht zudem vor, dass je eine Aufwälzrolle beidseitig am Transportkopf angebracht ist. Der Transportkopf ist wieder als Jalousiekopf ausgebildet. Das beiderseitige Anbringen von je einer Aufwälzrolle an den Jalousiekopf erhöht die Flexibilität der Vorrichtung. Dies zeigt sich dadurch, dass die aufzunehmenden Gebinde oder Gebindelagen über zwei Seiten dem Jalousiekopf zugeführt werden können. So könnte beispielsweise die Vorrichtung abwechselnd von zwei unterschiedlichen Paletten Gebinde aufnehmen, wobei das auch mit nur einer Aufwälzrolle möglich ist. Ein weiterer Vorteil liegt darin, dass die Geschwindigkeit beim Aufnehmen und Absetzen der einzelnen Gebinde oder Gebindelagen deutlich erhöht wird.

Die erfindungsgemäße Vorrichtung mit der in den Jalousiekopf integrierten und angetriebenen Aufwälzrolle findet besonders bei der Depalettierung von Gebinden oder Gebindelagen Anwendung. Die Gebinde umfassen überwiegend Flüssigkeitsbehälter. Die Gebinde oder Gebindelagen können vielseitig ausgebildet sein wie beispielsweise Weichpackungen, in Karton verpackte Artikel, Kaffeepäckchen, Shrinkpad, Shrinktray, Wraparoundkarton, Ziegelsteine, Zuckerpäckchen und stellen in einer bevorzugten Anwendung Flüssigkeitsbehälter dar.

Ein erfindungsgemäßes Verfahren zum Kommissionieren und/ oder Umschichten mehrerer palettierter Gebinde umfasst folgende Schritte: Die Aufwälzrolle des als Jalousiekepf ausgebildeten Transportkopfes nimmt mindestens eine Reihe von mindestens einer Lage von Gebinden in den Transportkopf auf. Der Transportkopf ist dabei mit einer Einrichtung versehen, die mindestens eine Reihe der Gebinde von mindestens einer obersten Lage der palettierten Gebinde teilweise anhebt. Es ist hier eine Vielzahl von Verfahrensabläufen denkbar. Bei entsprechender Ausgestaltung des Jalousiekopfes und dementsprechender Gebindehöhe wäre beispielsweise auch denkbar, dass man gleichzeitig mindestens zwei Lagen aufwälzt und diese gleichzeitig in den Jalousiekopf einführt.

Das Verfahren offenbart des Weiteren, dass mit dem Transportkopf von mindestens zwei Paletten mit unterschiedlichen Gebindetypen jeweils mindestens eine Reihe mindestens einer Lage entnommen wird. Diese Reihe wird dann auf einer neuen, zu erstellenden Palette abgesetzt.

Das erfindungsgemäße Verfahren zeigt zudem, dass die auf der neuen, zu erstellenden Palette abgesetzten Lagen aus Reihen von mindestens zwei unterschiedlichen Gebindetypen wieder aufgenommen und umsortiert abgesetzt werden können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine perspektivische Gesamtdarstellung einer Vorrichtung zum Überführen von Gebindelagen in einen Jalousiekopf. Sie ist Bestandteil der DE 10 2008 002 831 A1
Figur 2 zeigt eine Perspektivansicht der Vorrichtung.
Figuren 3 bis 9 zeigen in schematischen Schnittansichten verschiedene Verfahr- und Aufwälzpositionen der Vorrichtung.
Figur 10 zeigt einen Querschnitt der Aufwälzrolle.
Figuren 11 bis 14 zeigen in schematischen Draufsichten die Anordnung der Gebindelagen vor bzw. nach dem Kommissionieren und/ oder Umschichten mehrerer palettierter Gebinde.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele da, wie die erfindungsgemäße Vorrichtung oder das erfindungsgemäße Verfahren ausgestaltet sein können und stellen keine abschließende Begrenzung dar.

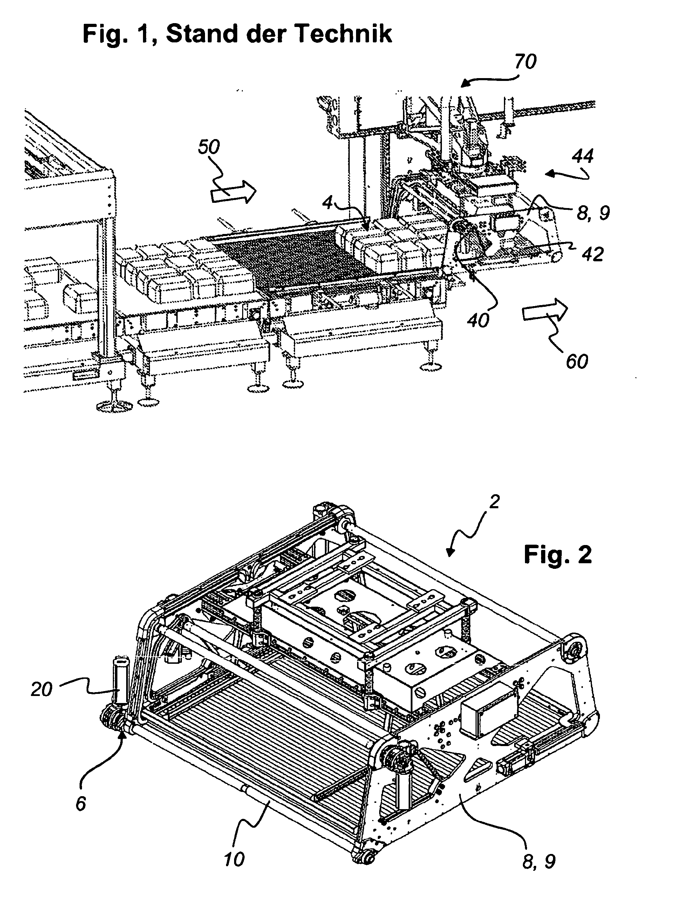

Figur 1 zeigt eine perspektivische Gesamtdarstellung einer herkömmlichen Vorrichtung zum Überführen von gruppierten Gebindelagen 4 mittels eines kontinuierlich antreibbaren Stetigförderers in die Beladestation 44 einer Transportvorrichtung 70. Die Beladestation 44, hier als ein Jalousiekopf 9 ausgestaltet, umfasst einen schwenkbaren Bügel 40, der zum Sichern der Gebindelagen 4 an der dem Stetigförderer zugewandten Seite vorgesehen ist. Ferner beaufschlagt der schwenkbare Bügel 40 die bereits zumindest teilweise der Beladestation 44 zugeführten Gebindelagen 4 mit einer zusätzlichen Bewegungskomponente 60 in Transportrichtung 50, um die zumindest teilweise in der Beladestation 44 bereits vorhandenen Gebindelagen 4 weiter beziehungsweise vollständig in den Jalousiekopf 9 zu schieben. In der Beladestation 44 ist eine Vielzahl von Rollen 42 vorgesehen, die das Überführen der Gebindelage 4 in die Beladestation 44 Transportvorrichtung 70 erleichtern. Die Rollen 42 bilden eine Auflage für die jeweilige Gebindelage 4. Durch den kombinierten Transport von dem Stetigförderer in die Beladestation 44 über die aktiv angetriebenen Rollen 42 wird eine erhebliche Zeiteinsparung beziehungsweise eine Reduzierung der Taktzeit erreicht.

Obwohl in den nachstehenden Figuren lediglich zwei Gebinde pro Lage gezeichnet sind, soll es nicht als Beschränkung der Erfindung aufgefasst werden. Die Zeichnungen sind lediglich schematische Darstellungen der Erfindungen und beschränken sich der Übersicht halber auf die für die Erfindung relevanten Bestandteile. Es ist für einen Fachmann selbstverständlich, dass der Jalousiekopf vorzugsweise immer mindestens eine komplette Reihe einer Gebindelage aufnimmt. Des Weiteren könnte der Jalousiekopf auch mehr als eine Lage von Gebinden aufwälzen und umschichten. Das Ablegen der aufgenommenen Lage oder Teillage erfolgt durch das mittige Öffnen des Förderteppichs des Jalousiekopfs. Dies ist sehr platzsparend, da seitlich keine Tragplatten oder Hilfsmittelaus dem Kopf herausragen. Der Förderteppich kann aus Rollen- oder Gliedersegmenten aufgebaut sein.

**Figur 2** zeigt in einer Perspektivansicht eine erfindungsgemäße Vorrichtung 2 mit einer am Transportkopf 8 integrierten Aufwälzrolle 10 zum Kommissionieren und/ oder Umschichten von Gebinden. Der Transportkopf 8 ist erfindungs gemäß als Jalousiekopf 9 ausgestaltet. Die Vorrichtung 2 weist dabei eine Einrichtung 6 auf, die durch eine vorderseitig am Transportkopf 8 integrierte und angetriebene Aufwälzrolle 10 ausgebildet ist. Die Aufwälzrolle 10 wird durch einen Antrieb 20 motorisch, gesteuert angetrieben.

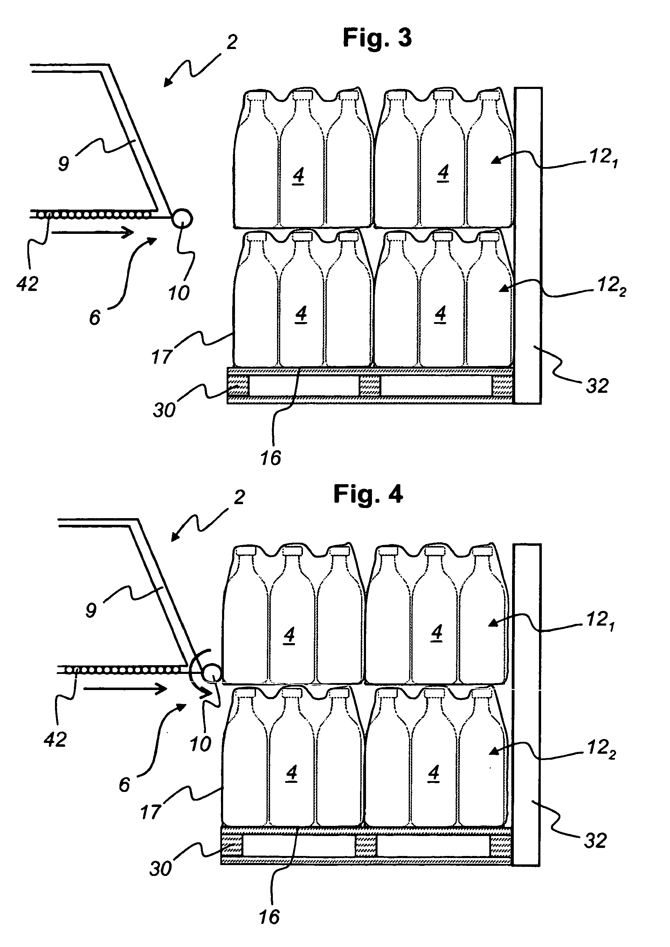

Die **Figuren 3** und **4** zeigen in einer Schnittansicht die Vorrichtung 2 mit der in der Einrichtung 6 aufweisenden Aufwälzrolle 10 bei der Zuführung des Jalousiekopfes 9 zum Gebinde 4 beziehungsweise zu der Gebindelage 12₁. Die Gebindelagen 12₁ und 12₂ sind dabei auf einer Palette 30 angeordnet und durch einen vorzugsweise an der Hinterseite der Palette 30 angebrachten Gegenhalter 32 gestützt. Dieser Gegenhalter 32 dient zur Erleichterung bei der Aufnahme der Gebinde 4 beziehungsweise der Gebindelagen 12₁ und 12₂. Der Jalousiekopf 9 steuert direkt an die Mantelfläche 16 des ersten Gebindes 4 der obersten Gebindelage 12₁. In Figur 4 liegt die Aufwälzrolle 10 bereits direkt an der Mantelfläche 16 des Gebindes 4 der obersten Gebindelage 12₁ an und steht somit kurz vor der Aufwälzung des ersten Gebindes 4.

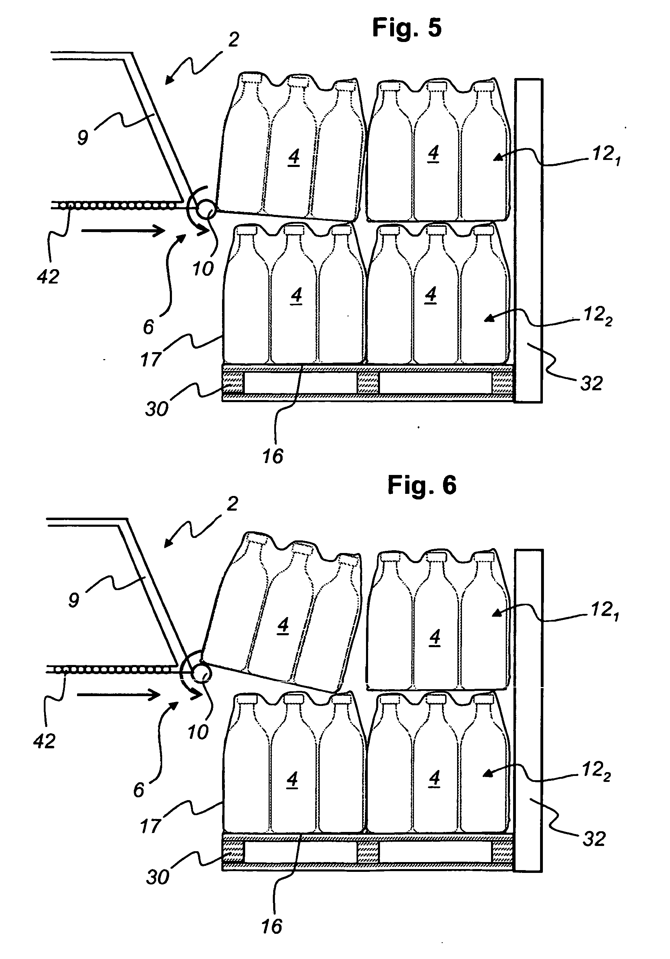

**Figur 5** zeigt in einer Schnittansicht die Vorrichtung 2, bei der das erste Gebinde 4 der obersten Gebindelage 12₁ bereits durch den Beginn der Aufwälzung mittels der Aufwälzrolle 10 leicht gekippt ist. Die Aufwälzrolle 10 liegt hierbei am unteren Abschnitt der Mantelfläche 16 des ersten Gebindes 4 der obersten Gebindeiage 12₁ an und führt die bereits in Figur 4 angedeutete Aufwälzung fort. Die Aufwälzung des ersten Gebindes 4 wird durch das als Stütze wirkende zweite Gebinde 4 der obersten Gebindelage 12₁ erleichtert. Die Gebindelagen 12₁ und 12₂ sind wie in den nachfolgenden Ausführungsbeispielen wiederum auf einer Palette 30 angeordnet und durch einen Gegenhalter 32 gestützt.

**Figur 6** zeigt ebenfalls in einer Schnittansicht die Vorrichtung 2, bei der das erste Gebinde 4 der obersten Gebindelage 12₁ bereits durch die Weiterführung der Aufwälzung stärker gekippt ist als zu einem früheren Zeitpunkt in Figur 5 dargestellt. Das erste Gebinde 4 der obersten Gebindelage 12₁ löst sich hierbei bereits vom zweiten Gebinde 4 der ersten Gebindelage 12₁. Das erste Gebinde 4 der obersten Gebindelage 12₁ liegt mit ihrer Bodenfläche 16 an der Oberseite der Aufwälzrolle 10 auf.

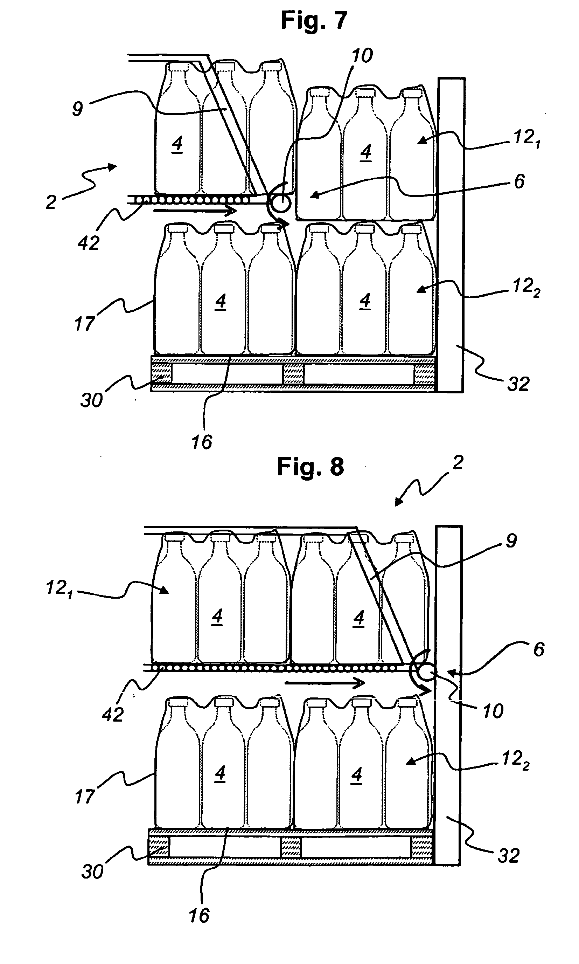

**Figur 7** zeigt in einer weiteren Schnittansicht die Vorrichtung 2, bei der das erste Gebinde 4 der obersten Gebindelage 12₁ nahezu vollständig durch die Rotationsbewegung der Aufwälzrolle 10 und der ebenfalls dazu stattfindenden horizontalen Verfahrbewegung des Transportkopfes 8 aufgewälzt und in den Transportkopf 8 aufgenommen ist. Das erste Gebinde 4 der obersten Gebindelage 12₁ nimmt hierbei eine waagrechte Position ein und weist gegenüber dem ersten Gebinde 4 der untersten Gebindelage 12₂ einen geringen Abstand auf. Innerhalb des Jalousiekopfes 9 ist eine Vielzahl von Rollen 42 angeordnet, die das Überführen der Gebinde 4 beziehungsweise der Gebindelagen 12₁ und 12₂ beim Weitertransport erleichtern. Die Rollen 42 bilden eine Auflage für die jeweiligen Gebinde 4 oder Gebindelagen 12₁ und 12₂. Die Rollen 42 könnten beispielsweise mit einem oder mehreren Elektromotoren versehen sein, so dass die Rollen 42 individuell angetrieben werden können um damit eine bessere Beförderung der Gebinde 4 beziehungsweise der Gebindelagen 12₁ und 12₂ innerhalb des Jalousiekopfes 9 zu gewährleisten.

**Figur 8** zeigt in einer Schnittansicht den Fortgang des Bewegungsablaufs der Vorrichtung 2, bei der das erste Gebinde 4 der obersten Gebindelage 12₁ mit seiner Bodenfläche 16 bereits innerhalb auf den im Jalousiekopf 9 befindlichen Rollen 42 aufliegt. Das zweite Gebinde 4 der obersten Gebindelage 12₁ befindet sich ebenfalls in waagrechter Position und liegt auf der Oberseite der Aufwälzrolle 10 auf und ist nahezu vollständig mittels der Aufwälzrolle 10 aufgewälzt. Das zweite Gebinde 4 der obersten Gebindelage 12₁ ist hierbei größtenteils vom Jalousiekopf 9 der Vorrichtung 2 aufgenommen und bereits um einen geringen Abstand zum Gegenhalter 32 distanziert. Durch die Aufnahme der obersten Gebindelage 12₁ weist diese bezüglich der untersten Gebindelage 12₂ einen ebenfalls geringen Abstand auf.

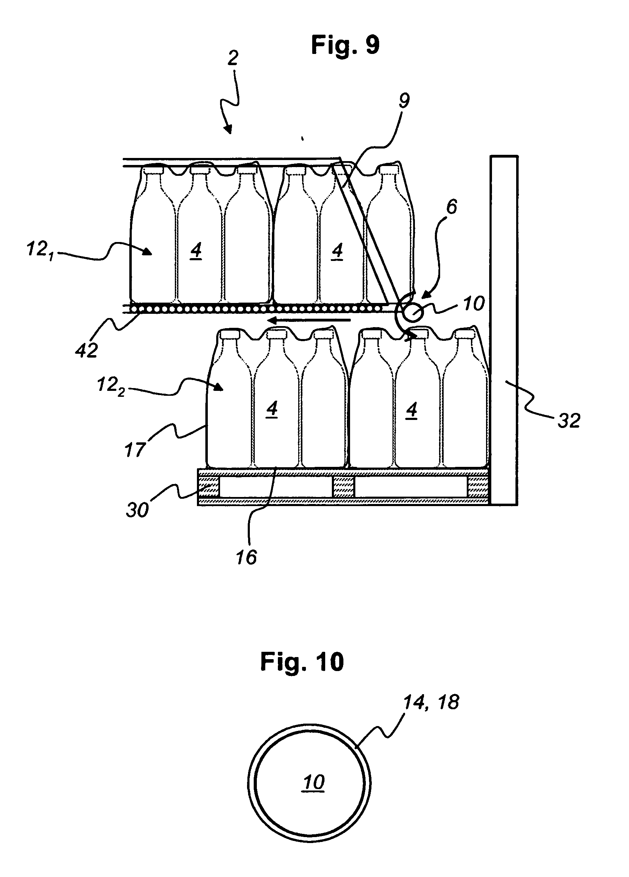

**Figur 9** zeigt wiederum in einer Schnittansicht eine weitere Verfahrposition des Jalousiekopfes 9 der Vorrichtung 2 nach Aufnahme der beiden Gebinde 4 der obersten Gebindelage 12₁. Hierbei liegen die beiden Gebinde 4 der obersten Gebindelage 12₁ wie in Figur 8 beschrieben bereits innerhalb der auf den im Jalousiekopf 9 befindlichen Rollen 42. Die beiden Gebinde 4 der obersten Gebindelage 12₁ weisen in dieser Position bezüglich der untersten Gebindelage 12₂ einen kleineren und gegenüber dem hinter der Palette 30 befindlichen Gegenhalter 32 einen größeren Abstand auf. Nach Aufnahme beider Gebinde 4 der obersten Gebindelage 12₁ kann diese beispielsweise auf eine andere bereitgestellte Palette 30 (nicht dargestellt) palettiert werden.

**Figur 10** zeigt eine detailgemäße Ausführungsform der Aufwälzrolle 10. Die Aufwälzrolle 10 weist hierbei eine Beschichtung 14 auf und kann beispielsweise mit einer Gummierung 18 versehen sein, um das Überführen der Gebinde 4 beziehungsweise der Gebindelagen 12₁ und 12₂ in den Jalousiekopf 9 der Vorrichtung 2 zu erleichtern.

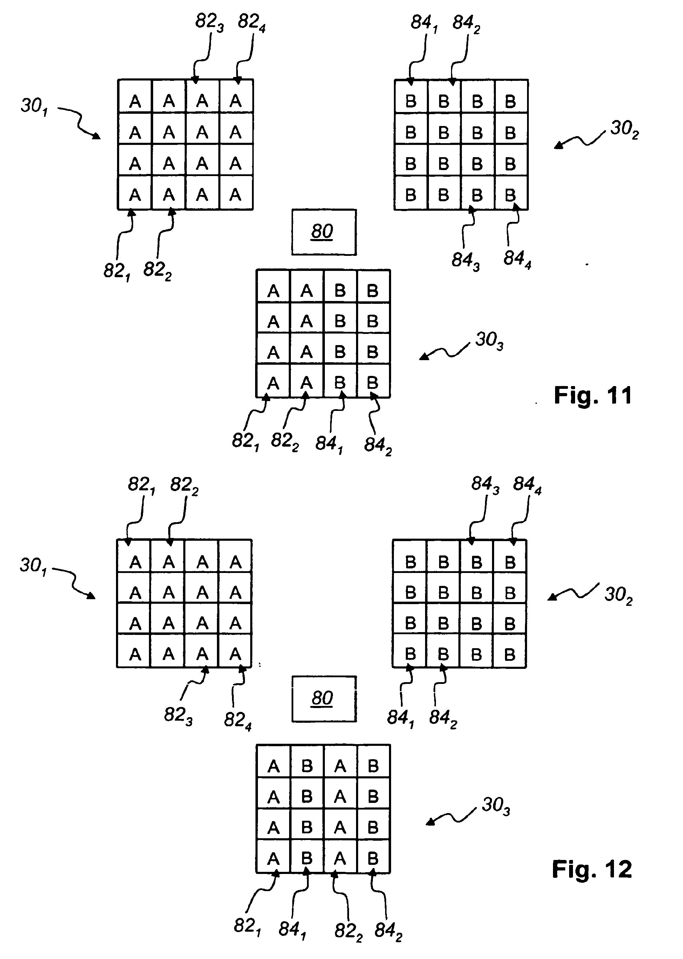

**Figur 11** zeigt in einer Draufsicht die Anordnung von Reihen einer obersten Lage von Gebinden vor und nach dem Umschichten der Gebindelagen. Die einzelnen Reihen einer Lage von Gebinden 82₁, 82₂, 82₃, 82₄ auf einer ersten Palette 30₁ und die einzelnen Reihen von Gebinden 84₁, 84₂, 84₃, 84₄ auf einer zweiten Palette 30₂ werden auf einer dritten Palette 30₃ in einer gemischten Ordnung abgelegt. Der Jalousiekopf (nicht dargestellt in Figur 11) eines Roboters 80 kann hierzu parallel oder auch seriell von der ersten Palette 30₁ zwei Reihen einer Lage 82₁ und 82₂ und anschließend zwei Reihen einer Lage 84₁ und 84₂ von der zweiten Palette 30₂ aufnehmen. Diese Lage aus gemischten Gebindetypen wird dann auf der dritten Palette 30₃ abgelegt.

**Figur 12** zeigt in einer Draufsicht eine andere Möglichkeit der Anordnung von Reihen einer obersten Lage von Gebinden. Hierbei nimmt der Roboter 80 abwechselnd von der ersten Palette 30₁ und von der zweiten Palette 30₂ eine Reihe einzelner Lagen von Gebinden 82₁, 84₁, 82₂, 84₄ auf. Die im Jalousiekopf des Roboters 80 gemischt vorliegende Lage aus Gebindetypen wird dann auf der dritten Palette 30₃ abgelegt.

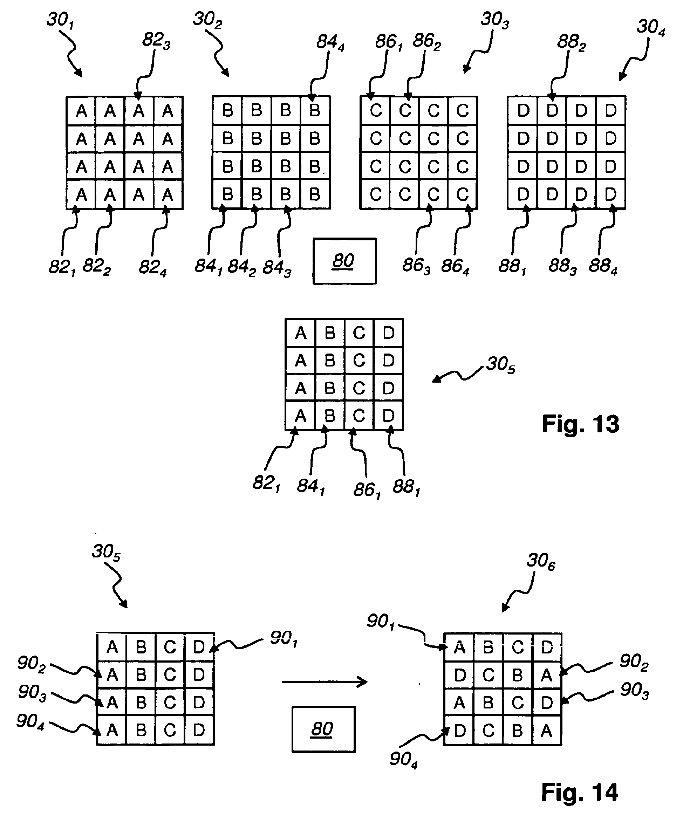

**Figur 13** zeigt in einer Draufsicht eine weitere Möglichkeit der Anordnung von Reihen einer Lage von Gebinden. Bei dieser Anordnung nimmt der Jalousiekopf des Roboters 80 abwechselnd von der ersten Palette 30₁, der zweiten Palette 30₂, der dritten Palette 30₃ und der vierten Palette 30₄ jeweils eine Reihe einzelner Lagen von Gebinden 82₁, 84₁, 86₁, 88₁ auf. Diese Lage wird dann auf einer fünften Palette 30₅ abgesetzt.

**Figur 14** zeigt in einer Draufsicht eine Fortführung der Umschichtung der Reihen von Gebinden mindestens einer Lage aus Figur 13. In dieser werden die Reihen einer obersten Lage von Gebinden von der fünften Palette 30₅ auf eine sechste Palette 30₆ derart umgeschichtet, dass die Reihe einer Lage unterschiedliche Gebinde aufweist. Hierbei greift der Roboter 80 zuerst eine Reihe 90₁ von unterschiedlichen Gebinden der Palette 30₅ auf. Anschließend wird der Jalousiekopf um 180° gedreht und wälzt die nächste Reihe von Gebinden 90₂ von der fünften Palette 30₅ auf. Dieser Vorgang wird solange wiederholt, bis die Lage im Jalousiekopf vollständig ist. Anschließend wird die vollständige Lage auf der Palette 30₆ abgesetzt. So entsteht eine komplett umorientierte Lage aus unterschiedlichen Gebindetypen.

Obwohl die vorstehende Beschreibung eine lagenweise Palettierung beschreibt, soll dies nicht als eine Beschränkung der Erfindung aufgefasst werden. Es ist ebenfalls eine Reihenweise Palettierung mit dem Jalousiekopf des Roboters 80 realisierbar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Vorrichtung (2) zum Kommissionieren und/ oder Umschichten mehrerer palettierter Gebinde (4) mit einer Einrichtung (6) zum Anheben der Gebinde (4) mindestens einer Teillage mindestens einer Lage der palettierten Gebinde (4) und zu deren Überführen auf einen Förderteppich eines beweglichen Transportkopfes (8), **dadurch gekennzeichnet, dass** die Einrichtung (6) durch mindestens eine am Transportkopf (8) integrierte und angetriebene Aufwälzrolle (10) gebildet ist, wobei der Transportkopf (8) ein Jalousiekopf (9) ist.

2. Vorrichtung (2) nach Anspruch 1, wobei der Jalousiekopf (9) zum Aufnehmen und Absetzen von zumindest Teillagen (12) ist.

3. Vorrichtung (2) nach einem der Ansprüche 1 bis 2, wobei eine Oberfläche der Aufwälzrolle (10) mit einer Beschichtung (14) versehen ist.

4. Vorrichtung (2) nach Anspruch 3, wobei die Oberfläche der Aufwälzrolle (10) eine Strukturierung aufweist.

5. Vorrichtung (2) nach Anspruch 3, wobei der Reibungskoeffizient zwischen der Oberfläche der Aufwälzrolle (10) und den aufzuwälzenden Gebinden (4) derart bemessen ist, um die Gebinde (4) in den Jalousiekopf (9) einzubringen.

6. Vorrichtung (2) nach Anspruch 4 oder 5, wobei die Beschichtung (14) eine Gummierung (18) aufweist.

7. Vorrichtung (2) nach einem der Ansprüche 1 bis 6, wobei der Aufwälzrolle (10) ein Antrieb (20) zugeordnet ist, der die Aufwälzrolle (10) motorisch, gesteuert antreibt.

8. Vorrichtung (2) nach einem der Ansprüche 1 bis 7, wobei je eine Aufwälzrolle (10) beidseitig am Transportkopf (8) angebracht ist.

9. Verwendung einer Vorrichtung (2) nach einem der Ansprüche 1 bis 8 zum Kommissionieren und/oder Umschichten von Gebinden (4), wobei die Gebinde (4) jeweils mehrere Artikel umfassen.

10. Verfahren zum Kommissionieren und/oder Umschichten mehrerer palettierter Gebinde (4), mit dem folgenden Schritt:
- Aufnehmen mindestens einer Reihe von mindestens einer Lage von Gebinden (4) in einen Transportkopf (8) mit einer Aufwälzrolle (10) des Transportkopfes (8), wobei der Transportkopf (8) mit einer Einrichtung (6) zum teilweisen Anheben der mindestens einen Reihe der Gebinde (4) von mindestens einer Lage der palettierten Gebinde (4) versehen ist,
**gekennzeichnet durch** den folgenden Schritt:
- Antreiben der Aufwälzrolle (10), die am Transportkopf (8) integriert ist, wobei der Transportkopf (8) als ein Jalousiekopf (9) ausgestaltet ist und die Einrichtung (6) zum teilweisen Anheben der mindestens einen Reihe der Gebinde (4) **durch** die Aufwälzrolle (10) gebildet wird.

11. Verfahren nach Anspruch 10, wobei die Gebindelagen (4) durch einen schwenkbaren Bügel (40) des Jalousiekopf es (9) gesichert werden.

12. Verfahren nach Anspruch 11, wobei der schwenkbare Bügel (40) mit einer zusätzlichen Bewegungskomponente (60) in einer Transportrichtung (50) beaufschlagt wird.

13. Verfahren nach einem der Ansprüche 10 bis 12, wobei mit dem Transportkopf (8) von mindestens zwei Paletten (30) mit unterschiedlichen Gebindetypen jeweils parallel oder seriell mindestens eine Reihe von mindestens einer Lage entnommen wird, und diese mindestens eine Reihe auf einer neuen, zu erstellenden Palette (30) abgesetzt wird.

14. Verfahren nach Anspruch 13, wobei die auf der neuen, zu erstellenden Palette (30) abgesetzten Lagen aus Reihen von mindestens zwei unterschiedlichen Gebindetypen wieder aufgenommen und umsortiert abgesetzt werden.

## Claims

1. Device (2) for order-picking and/or restacking a plurality of palletised packs (4) with an apparatus (6) for lifting the packs (4) of at least one partial layer of at least one layer of the palletised packs (4) and for transferring them onto a conveying table of a movable transport head (8), **characterised in that** the apparatus (6) is made up of at least one conveyor roller (10) integrated at and driven by the transport head (8), wherein the transport head (8) is a shutter head (9).

2. Device (2) according to Claim 1, wherein the shutter head (9) is for picking up and setting down at least partial layers (12).

3. Device (2) according to any one of Claims 1 to 2, wherein a surface of the conveyor roller (10) is provided with a coating (14).

4. Device (2) according to Claim 3, wherein the surface of the conveyor roller (10) exhibits a texture.

5. Device (2) according to Claim 3, wherein the friction coefficient between the surface of the conveyor roller (10) and the packs (4) to be rolled on is dimensioned such as to carry the packs (4) into the shutter head (9).

6. Device (2) according to Claim 4 or 5, wherein the coating (14) has a rubber coat (18).

7. Device (2) according to any one of Claims 1 to 6, wherein the conveyor roller (10) is assigned to a drive (20), which drives the conveyor roller (10) in a motor-controlled manner.

8. Device (2) according to any one of Claims 1 to 7, wherein respectively one conveyor roller (10) is attached at both sides of the transport head (8).

9. Use of a device (2) according to any one of Claims 1 to 8 for order-picking and/or restacking packs (4), wherein the packs (4) respectively comprise a plurality of articles.

10. Method for order-picking and/or restacking a plurality of palletised packs (4), with the following step:
- receiving at least one row of at least one layer of packs (4) in a transport head (8) with a conveyor roller (10) of the transport head (8), wherein the transport head (8) is provided with an apparatus (6) for partially lifting of the at least one row of the packs (4) from at least one layer of the palletised packs (4),
**characterised by** the following step:
- driving the conveyor roller (10), which is integrated at the transport head (8), wherein the transport head (8) is designed as a shutter head (9) and the apparatus (6) is formed for partial lifting of the at least one row of the packs (4) by the conveyor roller (10).

11. Method according to Claim 10, wherein the pack layers (4) are secured by a pivotable bracket (40) of the shutter head (9).

12. Method according to Claim 11, wherein the pivotable bracket (40) is equipped with an additional motional component (60) in a conveying direction (50).

13. Method according to any one of Claims 10 to 12, wherein, with the transport head (8), respectively in parallel or serially, at least one row of at least one layer is removed from at least two pallets (30) with different pack types and said at least one row is set down on a new pallet (30) to be produced.

14. Method according to Claim 13, wherein the row layers of at least two different pack types placed on the new pallet (30) to be produced are again picked up, resorted and set down.

## Revendications

1. Dispositif (2) pour la préparation des commandes et/ou le regroupement d'une pluralité de packs (4) palettisés avec un équipement (6) pour le levage des packs (4) d'au moins une couche partielle d'au moins une couche des packs (4) palettisés et pour leur transfert sur un tapis de manutention d'une tête de transport mobile (8), **caractérisé en ce que** l'équipement (6) est formé par au moins un rouleau de prise (10) intégré à la tête de transport (8) et entraîné, étant donné que la tête de transport (8) est une tête de jalousie (9).

2. Dispositif (2) selon la revendication 1, dans lequel la tête de jalousie (9) est destinée à collecter et déposer au moins des couches partielles (12).

3. Dispositif (2) selon l'une quelconque des revendications 1 à 2, dans lequel une surface du rouleau de prise (10) porte un revêtement (14).

4. Dispositif (2) selon la revendication 3, dans lequel la surface du rouleau de prise (10) présente une structure.

5. Dispositif (2) selon la revendication 3, dans lequel le coefficient de friction entre la surface du rouleau de prise (10) et les packs (4) à prendre au rouleau est défini de telle sorte que les packs (4) puissent être introduits dans la tête de jalousie (9).

6. Dispositif (2) selon la revendication 4 ou 5, dans lequel le revêtement (14) présente un caoutchoutage (18).

7. Dispositif (2) selon l'une quelconque des revendications 1 à 6, dans lequel le rouleau de prise (10) est affecté à un système d'entraînement (20) qui entraîne le rouleau de prise (10) par commande à moteur.

8. Dispositif (2) selon l'une quelconque des revendications 1 à 7, dans lequel chaque fois un rouleau de prise (10) est monté sur les deux côtés de la tête de transport (8).

9. Utilisation d'un dispositif (2) selon l'une quelconque des revendications 1 à 8 pour la préparation des commandes et/ou le regroupement de packs (4), étant donné que les packs (4) comprennent chacun une pluralité d'articles.

10. Procédé pour la préparation des commandes et/ou le regroupement d'une pluralité de packs (4) palettisés, avec l'étape suivante :
- réception d'au moins une rangée d'au moins une couche de packs (4) dans une tête de transport (8) avec un rouleau de prise (10) de la tête de transport (8), étant donné que la tête de transport (8) est dotée d'un équipement (6) pour le levage partiel de la au moins une rangée des packs (4) d'au moins une couche des packs (4) palettisés, **caractérisé par** l'étape suivante :
- entraînement du rouleau de prise (10) qui est intégré à la tête de transport (8), étant donné que la tête de transport (8) est conçue comme tête de jalousie (9) et l'équipement (6) pour le levage partiel de la au moins une rangée des packs (4) est formé par le rouleau de prise (10).

11. Procédé selon la revendication 10, dans lequel les couches de packs (4) sont sécurisées par un étrier pivotant (40) de la tête de jalousie (9).

12. Procédé selon la revendication 11, dans lequel un composant de mouvement (60) supplémentaire est appliqué sur l'étrier pivotant (40) dans un sens de transport (50).

13. Procédé selon l'une quelconque des revendications 10 à 12, dans lequel la tête de transport (8) est utilisée pour prélever d'au moins deux palettes (30) de types de packs différents respectivement en parallèle ou en série au moins une rangée d'au moins une couche, et cette au moins une rangée est déposée sur une nouvelle palette (30) à former.

14. Procédé selon la revendication 13, dans lequel les couches déposées sur la nouvelle palette (30) à former sont de nouveau prises de rangées d'au moins deux types de packs différents et déposées après avoir été reclassées.
